# EUROPEAN PATENT SPECIFICATION

(11) **EP 3 768 039 B1**
(45) Date of publication and mention of the grant of the patent: **28.02.2024**
(21) Application number: 20179098.7
(22) Date of filing: 16.03.2015
(51) Int. Cl.: H04W 84/04, H04W 12/00, H04W 36/00, H04W 76/11, H04W 12/04, H04W 12/033, H04W 12/041

(54) **KEY GENERATION METHOD, MASTER ENODEB, SECONDARY ENODEB AND USER EQUIPMENT**
SCHLÜSSELERZEUGUNGSVERFAHREN, MASTER-ENODEB, SEKUNDÄR-ENODEB UND BENUTZERVORRICHTUNG
PROCÉDÉ DE GÉNÉRATION DE CLÉ, ENODEB MAÎTRE, ENODEB SECONDAIRE ET ÉQUIPEMENT D'UTILISATEUR

(30) Priority: 18.03.2014 CN 201410100651
(43) Date of publication of application: 20.01.2021
(62) Divisional of application: 15765368.4
(73) Proprietor: HUAWEI TECHNOLOGIES CO., LTD., Shenzhen, Guangdong 518129 (CN)
(72) Inventor: GAN, Lu, Shenzhen, Guangdong 518129, P.R. (CN); WU, Rong, Shenzhen, Guangdong 518129, P.R. (CN); HE, Chengdong, Shenzhen, Guangdong 518129, P.R. (CN)
(74) Representative: Gill Jennings & Every LLP

(56) References cited:
- WO-A1-2013/064041
- CN-A- 102 740 289
- Menezes, Vanstone, Oorschot: "Handbook of Applied Cryptography", 1997, CRC Press LLC, USA, XP001525013, pages 543-590, * page 568 *

## Description

### TECHNICAL FIELD

The present disclosure relates to the field of communications technologies, and in particular, to a key generation method, a master eNodeB, a secondary eNodeB, and user equipment.

### BACKGROUND

With development of communications technologies, a 4G communications system is widely used. In the 4G communications system, to improve a user plane data throughput of user equipment, the user equipment may connect to both a master eNodeB (MeNB, Master eNB) and a secondary eNodeB (SeNB, Secondary eNB), and the user equipment may simultaneously transmit user plane data to the master eNodeB and the secondary eNodeB. The master eNodeB is a macro base station (Marco eNB/cell), and the secondary eNodeB is a small cell (Small eNB/cell). The small cell is specifically a micro base station (Pico eNB/cell) or a femto base station (Femto eNB/cell).

Considering security of user plane data transmission between the user equipment and the secondary eNodeB, security protection needs to be performed on user plane transmission between the user equipment and the secondary eNodeB. In an existing key generation method, user plane keys of the user equipment and the secondary eNodeB are both generated by the master eNodeB and sent to the user equipment and the secondary eNodeB, which causes extremely heavy load on the master eNodeB. In addition, for same user equipment and a secondary eNodeB, only one user plane key is generated, that is, all user plane keys between the secondary eNodeB and the same user equipment are the same. If one user plane key between the user equipment and the secondary eNodeB is cracked, all the user plane keys between the same user equipment and the secondary eNodeB are cracked.

It may be learned that the existing key generation method causes extremely heavy load on a master eNodeB, and security of a generated user plane key between user equipment and a secondary eNodeB is relatively low.

CN102740289 relates to a kind of key updating method, apparatus and system.

### SUMMARY

In view of this, implementations of the present disclosure provide a key generation method, a secondary eNodeB, and user equipment, so as to reduce load of the master eNodeB and improve security of a user plane key between the user equipment and the secondary eNodeB.

The invention has been defined in the independent claims. Further specific technical features have been defined in the dependent claims.

According to the foregoing solutions, a user plane key between user equipment and a secondary eNodeB is separately generated by the user equipment and the secondary eNodeB, so that load of a master eNodeB may be effectively reduced. In addition, different user plane keys between same user equipment and the secondary eNodeB are generated for different DRBs, so that security of the user plane keys between the secondary eNodeB and the user equipment may be effectively improved.

### BRIEF DESCRIPTION OF DRAWINGS

FIG. 1 is a schematic flowchart of a key generation method according to Implementation 1 of the present disclosure;
FIG. 2 is a signaling diagram of the key generation method according to Implementation 1 of the present disclosure;
FIG. 3 is a schematic flowchart of a key generation method according to Implementation 2 of the present disclosure;
FIG. 4 is a signaling diagram of the key generation method according to Implementation 2 of the present disclosure;
FIG. 5 is a schematic flowchart of a key generation method according to Implementation 3 of the present disclosure;
FIG. 6 is a signaling diagram of the key generation method according to Implementation 3 of the present disclosure;
FIG. 7 is a schematic structural diagram of a secondary eNodeB according to Implementation 4 of the present disclosure;
FIG. 8 is a schematic structural diagram of a secondary eNodeB according to Implementation 5 of the present disclosure;
FIG. 9 is a schematic structural diagram of a master eNodeB according to Implementation 6 of the present disclosure;
FIG. 10 is a schematic structural diagram of a master eNodeB according to Implementation 7 of the present disclosure;
FIG. 11 is a schematic structural diagram of a master eNodeB according to Implementation 8 of the present disclosure;
FIG. 12 is a schematic structural diagram of a master eNodeB according to Implementation 9 of the present disclosure;
FIG. 13 is a schematic structural diagram of user equipment according to Implementation 10 of the present disclosure; and
FIG. 14 is a schematic structural diagram of user equipment according to Implementation 10 of the present disclosure.

The following further describes in detail the technical solutions of the implementations of the present disclosure with reference to the accompanying drawings and implementations.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

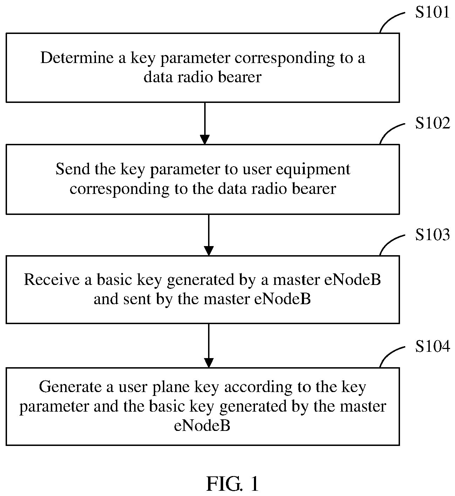

The following uses FIG. 1 as an example to describe in detail a key generation method provided in Implementation 1 of the present disclosure. FIG. 1 is a schematic flowchart of a key generation method according to Implementation 1 of the present disclosure. An execution body of the key generation method is a secondary eNodeB. The secondary eNodeB is a small cell, and the small cell is specifically a micro base station or a femto base station.

As shown in FIG. 1, the key generation method includes the following steps:

Step S101: Determine a key parameter corresponding to a data radio bearer (Data Radio Bearer, DRB).

The key parameter may be allocated by the secondary eNodeB or a master eNodeB. The master eNodeB is a macro base station.

Optionally, if the key parameter is allocated by the secondary eNodeB, the key parameter includes at least one of the following parameters: a DRB ID, a random number, or a counter value.

Specifically, after user equipment establishes a radio resource control protocol (Radio Resource Control, RRC) connection to the master eNodeB, the secondary eNodeB receives a DRB establishing or adding request sent by the master eNodeB. After receiving the DRB establishing or adding request, the secondary eNodeB allocates a DRB to the user equipment and allocates a DRB ID to the DRB. A DRB ID of each DRB is unique, and therefore the DRB ID may be used as a key parameter corresponding to the DRB.

The secondary eNodeB may include a random number generator. After the user equipment establishes the RRC connection to the master eNodeB, the secondary eNodeB receives a DRB establishing or adding request sent by the master eNodeB. After receiving the DRB establishing or adding request, the secondary eNodeB allocates a DRB to the user equipment, and then the random number generator generates a random number for the DRB. Each random number generated by the random number generator is unique, and therefore the random number may be used as a key parameter corresponding to the DRB.

The secondary eNodeB may further include a counter. After the user equipment establishes the RRC connection to the master eNodeB, the secondary eNodeB receives a DRB establishing or adding request sent by the master eNodeB. After receiving the DRB establishing or adding request, the secondary eNodeB allocates a DRB to the user equipment, and then the counter generates a counter value for the DRB. Each counter value generated by the counter is unique, and therefore the counter value may be used as a key parameter corresponding to the DRB.

Optionally, if the key parameter is allocated by the master eNodeB, before step S101, the following step is further included:
receiving a DRB establishing or adding request sent by the master eNodeB, where the DRB establishing or adding request carries the key parameter.

The key parameter includes only a DRB ID.

Specifically, after user equipment establishes an RRC connection to the master eNodeB, the master eNodeB allocates a DRB to the user equipment. A DRB ID of each DRB is unique, and therefore the DRB ID may be used as a key parameter corresponding to the DRB.

Accordingly, step S101 is specifically: obtaining the key parameter from the received DRB establishing or adding request.

Step S102: Send the key parameter to user equipment corresponding to the DRB.

Optionally, the secondary eNodeB may first send the key parameter to the master eNodeB, and then the master eNodeB forwards the key parameter to the user equipment.

After receiving the key parameter sent by the secondary eNodeB, the user equipment performs, by using a key derivation function (key derivation function, KDF), calculation on the key parameter and a basic key (for example, a secondary eNodeB key S-KeNB) generated by the user equipment, so as to generate a user plane key.

Step S 103: Receive a basic key generated by a master eNodeB and sent by the master eNodeB.

The basic key generated by the user equipment and the basic key generated by the master eNodeB are the same.

Specifically, the user equipment and the master eNodeB separately perform calculation on a same shared key (for example, a base station key KeNB) and a same shared key parameter by using the key derivation function KDF, so as to generate a basic key. Therefore, the basic key generated by the user equipment and the basic key generated by the master eNodeB are the same.

Step S104: Generate a user plane key according to the key parameter and the basic key generated by the master eNodeB.

The secondary eNodeB generates, in a same manner in which the user equipment generates a user plane key, the user plane key according to the key parameter and the basic key generated by the master eNodeB. Because the basic key generated by the user equipment and the basic key generated by the master eNodeB are the same, and a same user plane key generation manner is used, the user plane key generated by the user equipment and the user plane key generated by the secondary eNodeB are the same.

Optionally, the user plane key generated in this implementation may be specifically a user plane cipher key. Before sending user plane data, the user equipment or the secondary eNodeB encrypts, according to the generated user plane cipher key, the user plane data to form a ciphertext, so that the data cannot be cracked in a sending process. Correspondingly, after receiving the user plane data, the user equipment or the secondary eNodeB decrypts the user plane data according to the generated user plane cipher key to obtain original user plane data.

Optionally, the user plane key generated in this implementation may be specifically a user plane integrity protection key. Before sending user plane data, the user equipment or the secondary eNodeB performs integrity protection on the user plane data according to the generated user plane integrity protection key, so that the data cannot be tampered in a sending process. Correspondingly, after receiving the user plane data, the user equipment or the secondary eNodeB checks integrity of the user plane data according to the generated user plane integrity protection key, so as to ensure that the user plane data is not tampered.

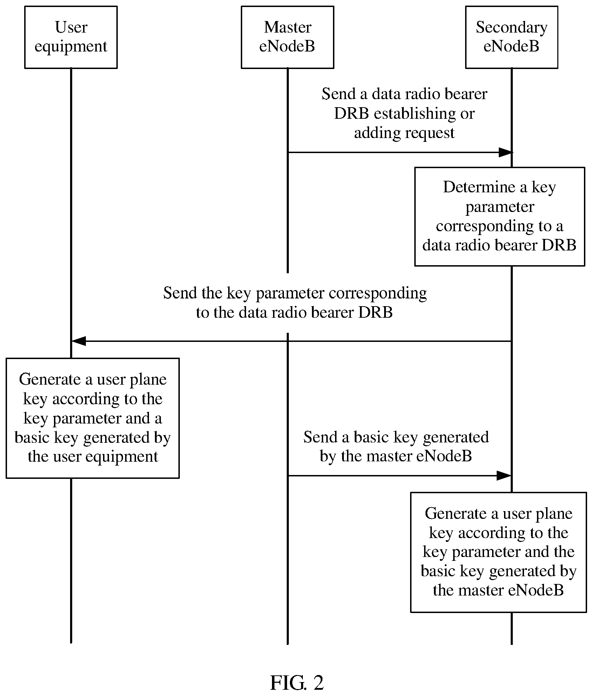

Further, FIG. 2 is a signaling diagram of the key generation method according to Implementation 1 of the present disclosure. The signaling diagram shown in FIG. 2 shows in detail a procedure of interaction among user equipment, a master eNodeB, and a secondary eNodeB. The secondary eNodeB in FIG. 2 is the execution body of the key generation method provided in Implementation 1. Key generation methods in FIG. 2 may all be executed according to a process described in the foregoing Implementation 1, and are not repeated herein.

According to the used key generation method provided in Implementation 1 of the present disclosure, a user plane key between user equipment and a secondary eNodeB is separately generated by the user equipment and the secondary eNodeB, so that load of a master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

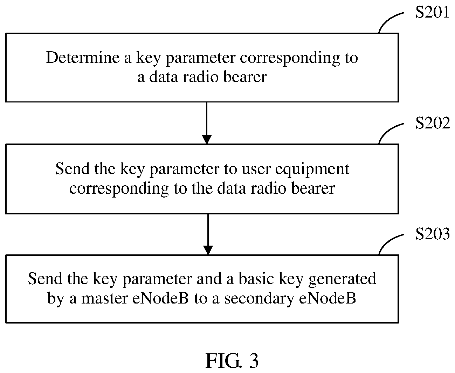

The following uses FIG. 3 as an example to describe in detail a key generation method provided in Implementation 2 of the present disclosure. FIG. 3 is a schematic flowchart of a key generation method according to Implementation 2 of the present disclosure. An execution body of the key generation method is a master eNodeB. The master eNodeB is a macro base station.

As shown in FIG. 2, the key generation method includes the following steps:
Step S201: Determine a key parameter corresponding to a DRB.

The key parameter includes a DRB ID.

Specifically, after user equipment establishes an RRC connection to the master eNodeB, the master eNodeB allocates a DRB to the user equipment and allocates a DRB ID to the DRB. A DRB ID of each DRB is unique, and therefore the DRB ID may be used as a key parameter corresponding to the DRB.

Step S202: Send the key parameter to user equipment corresponding to the DRB.

After receiving the key parameter sent by a secondary eNodeB, the user equipment performs, by using a key derivation function KDF, calculation on the key parameter and a basic key (for example, a secondary eNodeB key S-KeNB) generated by the user equipment, so as to generate a user plane key.

The secondary eNodeB is a small cell, and the small cell is specifically a micro base station or a femto base station. Step S203: Send the key parameter and a basic key generated by the master eNodeB to a secondary eNodeB.

The basic key generated by the user equipment and the basic key generated by the master eNodeB are the same.

Specifically, the user equipment and the master eNodeB separately perform calculation on a same shared key (for example, a base station key KeNB) and a same shared key parameter by using the key derivation function KDF, so as to generate a basic key. Therefore, the basic key generated by the user equipment and the basic key generated by the master eNodeB are the same.

The secondary eNodeB generates, in a same manner in which the user equipment generates a user plane key, a user plane key according to the key parameter and the basic key generated by the master eNodeB. Because the basic key generated by the user equipment and the basic key generated by the master eNodeB are the same, and a same user plane key generation manner is used, the user plane key generated by the user equipment and the user plane key generated by the secondary eNodeB are the same.

Optionally, the user plane key generated in this implementation may be specifically a user plane cipher key. Before sending user plane data, the user equipment or the secondary eNodeB encrypts, according to the generated user plane cipher key, the user plane data to form a ciphertext, so that the data cannot be cracked in a sending process. Correspondingly, after receiving the user plane data, the user equipment or the secondary eNodeB decrypts the user plane data according to the generated user plane cipher key to obtain original user plane data.

Optionally, the user plane key generated in this implementation may be specifically a user plane integrity protection key. Before sending user plane data, the user equipment or the secondary eNodeB performs integrity protection on the user plane data according to the generated user plane integrity protection key, so that the data cannot be tampered in a sending process. Correspondingly, after receiving the user plane data, the user equipment or the secondary eNodeB checks integrity of the user plane data according to the generated user plane integrity protection key, so as to ensure that the user plane data is not tampered.

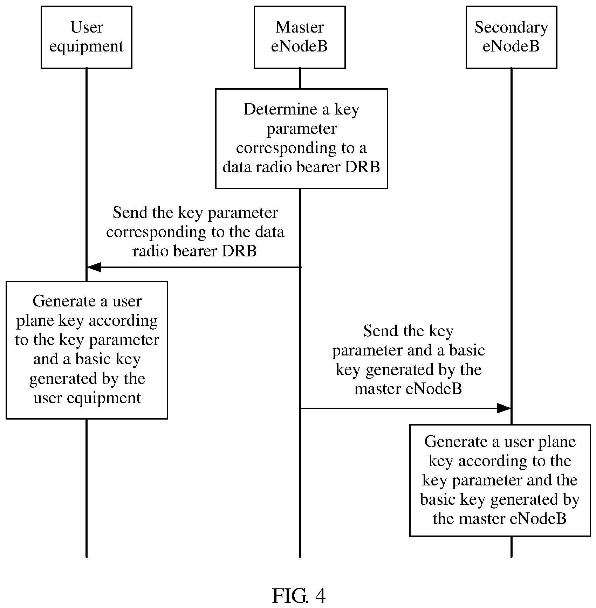

Further, FIG. 4 is a signaling diagram of the key generation method according to Implementation 2 of the present disclosure. The signaling diagram shown in FIG. 4 shows in detail a procedure of interaction among user equipment, a master eNodeB, and a secondary eNodeB. The master eNodeB in FIG. 4 is the execution body of the key generation method provided in Implementation 2. Key generation methods in FIG. 4 may all be executed according to a process described in the foregoing Implementation 2, and are not repeated herein.

According to the used key generation method provided in Implementation 2 of the present disclosure, a user plane key between user equipment and a secondary eNodeB is separately generated by the user equipment and the secondary eNodeB, so that load of a master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

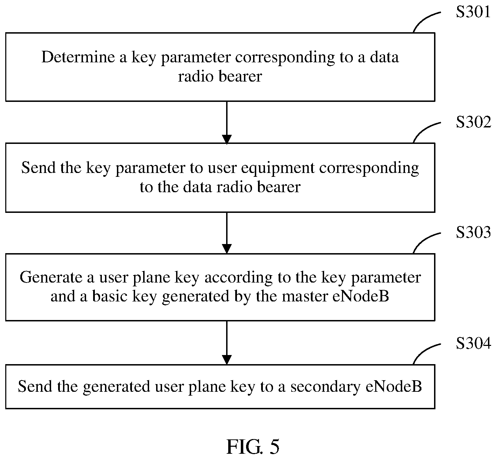

The following uses FIG. 5 as an example to describe in detail a key generation method provided in Implementation 3 of the present disclosure. FIG. 5 is a schematic flowchart of a key generation method according to Implementation 3 of the present disclosure. An execution body of the key generation method is a master eNodeB. The master eNodeB is a macro base station.

As shown in FIG. 3, the key generation method includes the following steps:

Step S301: Determine a key parameter corresponding to a DRB.

The key parameter includes a DRB ID.

Specifically, after user equipment establishes an RRC connection to the master eNodeB, the master eNodeB allocates a DRB to the user equipment and allocates a DRB ID to the DRB. A DRB ID of each DRB is unique, and therefore the DRB ID may be used as a key parameter corresponding to the DRB.

Step S302: Send the key parameter to user equipment corresponding to the DRB.

After receiving the key parameter sent by a secondary eNodeB, the user equipment performs, by using a key derivation function KDF, calculation on the key parameter and a basic key (for example, a secondary eNodeB key S-KeNB) generated by the user equipment, so as to generate a user plane key.

The secondary eNodeB is a small cell, and the small cell is specifically a micro base station or a femto base station. Step S303: Generate a user plane key according to the key parameter and a basic key generated by the master eNodeB.

The basic key generated by the user equipment and the basic key generated by the master eNodeB are the same.

Specifically, the user equipment and the master eNodeB separately perform calculation on a same shared key (for example, a base station key KeNB) and a same shared key parameter by using the key derivation function KDF, so as to generate a basic key. Therefore, the basic key generated by the user equipment and the basic key generated by the master eNodeB are the same. The master eNodeB generates, in a same manner in which the user equipment generates a user plane key, the user plane key according to the key parameter and the basic key generated by the master eNodeB. Because the basic key generated by the user equipment and an S basic key generated by the master eNodeB are the same, and a same user plane key generation manner is used, the user plane key generated by the user equipment and the user plane key generated by the master eNodeB are the same.

Step S304: Send the generated user plane key to a secondary eNodeB.

The secondary eNodeB uses the user plane key sent by the master eNodeB as a user plane key between the user equipment and the secondary eNodeB.

Optionally, the user plane key generated in this implementation may be specifically a user plane cipher key. Before sending user plane data, the user equipment or the secondary eNodeB encrypts, according to the generated user plane cipher key, the user plane data to form a ciphertext, so that the data cannot be cracked in a sending process. Correspondingly, after receiving the user plane data, the user equipment or the secondary eNodeB decrypts the user plane data according to the generated user plane cipher key to obtain original user plane data.

Optionally, the user plane key generated in this implementation may be specifically a user plane integrity protection key. Before sending user plane data, the user equipment or the secondary eNodeB performs integrity protection on the user plane data according to the generated user plane integrity protection key, so that the data cannot be tampered in a sending process. Correspondingly, after receiving the user plane data, the user equipment or the secondary eNodeB checks integrity of the user plane data according to the generated user plane integrity protection key, so as to ensure that the user plane data is not tampered.

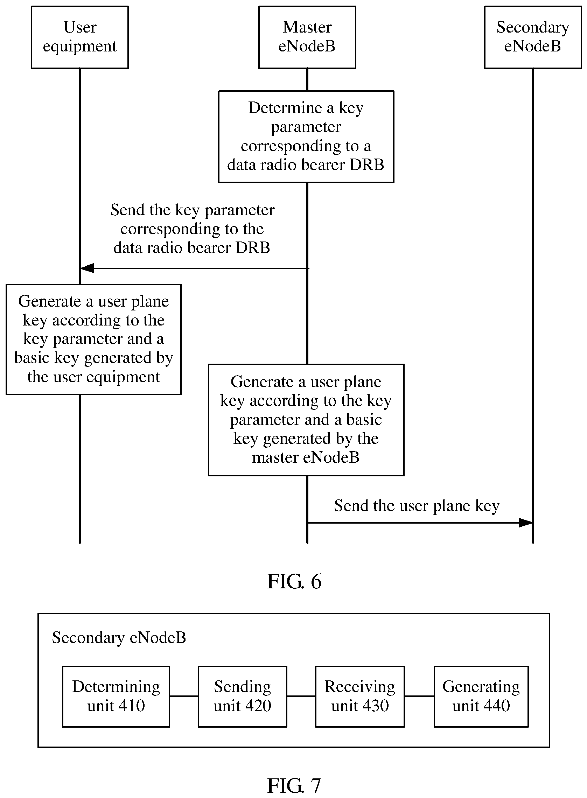

Further, FIG. 6 is a signaling diagram of the key generation method according to Implementation 3 of the present disclosure. The signaling diagram shown in FIG. 6 shows in detail a procedure of interaction among user equipment, a master eNodeB, and a secondary eNodeB. The master eNodeB in FIG. 6 is the execution body of the key generation method provided in Implementation 3. Key generation methods in FIG. 6 may all be executed according to a process described in the foregoing Implementation 3, and are not repeated herein.

According to the used key generation method provided in Implementation 3 of the present disclosure, a user plane key between user equipment and a secondary eNodeB is separately generated by the user equipment and a master eNodeB, so that load of the master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

The following uses FIG. 7 as an example to describe in detail a secondary eNodeB provided in Implementation 4 of the present disclosure. FIG. 7 is a schematic structural diagram of a secondary eNodeB according to Implementation 4 of the present disclosure. The secondary eNodeB is a small cell, and the small cell is specifically a micro base station or a femto base station configured to implement the key generation method provided in Implementation 1 of the present disclosure.

As shown in FIG. 7, the secondary eNodeB includes: a determining unit 410, a sending unit 420, a receiving unit 430, and a generating unit 440.

The determining unit 410 is configured to determine a key parameter corresponding to a DRB.

The key parameter may be allocated by the secondary eNodeB or a master eNodeB. The master eNodeB is a macro base station.

Optionally, if the key parameter is allocated by the secondary eNodeB, the key parameter includes at least one of the following parameters: a DRB ID, a random number, or a counter value.

Specifically, after user equipment establishes an RRC connection to the master eNodeB, the secondary eNodeB receives a DRB establishing or adding request sent by the master eNodeB. After receiving the DRB establishing or adding request, the secondary eNodeB allocates a DRB to the user equipment, and the determining unit 410 allocates a DRB ID to the DRB. A DRB ID of each DRB is unique, and therefore the determining unit 410 uses the DRB ID as a key parameter corresponding to the DRB.

The determining unit 410 may include a random number generator. After the user equipment establishes the RRC connection to the master eNodeB, the secondary eNodeB receives a DRB establishing or adding request sent by the master eNodeB. After receiving the DRB establishing or adding request, the secondary eNodeB allocates a DRB to the user equipment, and then the random number generator generates a random number for the DRB. Each random number generated by the random number generator is unique, and therefore the determining unit 410 may use the random number as a key parameter corresponding to the DRB.

The determining unit 410 may further include a counter. After the user equipment establishes the RRC connection to the master eNodeB, the secondary eNodeB receives a DRB establishing or adding request sent by the master eNodeB. After receiving the DRB establishing or adding request, the secondary eNodeB allocates a DRB to the user equipment, and then the counter generates a counter value for the DRB. Each counter value generated by the counter is unique, and therefore the determining unit 410 may use the counter value as a key parameter corresponding to the DRB.

Optionally, if the key parameter is allocated by the master eNodeB, the receiving unit 430 is configured to receive a DRB establishing or adding request sent by the master eNodeB, where the DRB establishing or adding request carries the key parameter.

The key parameter includes only a DRB ID.

Specifically, after user equipment establishes an RRC connection to the master eNodeB, the master eNodeB allocates a DRB to the user equipment and allocates a DRB ID to the DRB. A DRB ID of each DRB is unique, and therefore the DRB ID may be used as a key parameter corresponding to the DRB.

Accordingly, the determining unit 410 is specifically configured to obtain the key parameter from the received DRB establishing or adding request.

The sending unit 420 is configured to send the key parameter to user equipment corresponding to the DRB.

Optionally, the sending unit 420 may first send the key parameter to the master eNodeB, and then the master eNodeB forwards the key parameter to the user equipment.

After receiving the key parameter sent by the secondary eNodeB, the user equipment performs, by using a key derivation function KDF, calculation on the key parameter and a basic key (for example, a secondary eNodeB key S-KeNB) generated by the user equipment, so as to generate a user plane key.

The receiving unit 430 is configured to receive a basic key generated by the master eNodeB and sent by the master eNodeB.

The basic key generated by the user equipment and the basic key generated by the master eNodeB are the same.

Specifically, the user equipment and the master eNodeB separately perform calculation on a same shared key (for example, a base station key KeNB) and a same shared key parameter by using the key derivation function KDF, so as to generate a basic key. Therefore, the basic key generated by the user equipment and the basic key generated by the master eNodeB are the same.

The generating unit 440 is configured to generate a user plane key according to the key parameter and the basic key generated by the master eNodeB.

The generating unit 440 generates, in a same manner in which the user equipment generates a user plane key, the user plane key according to the key parameter and the basic key generated by the master eNodeB. Because the basic key generated by the user equipment and the basic key generated by the master eNodeB are the same, and a same user plane key generation manner is used, the user plane key generated by the user equipment and the user plane key generated by the generating unit 440 are the same.

Optionally, the user plane key generated in this implementation may be specifically a user plane cipher key. Before sending user plane data, the user equipment or the secondary eNodeB encrypts, according to the generated user plane cipher key, the user plane data to form a ciphertext, so that the data cannot be cracked in a sending process. Correspondingly, after receiving the user plane data, the user equipment or the secondary eNodeB decrypts the user plane data according to the generated user plane cipher key to obtain original user plane data.

Optionally, the user plane key generated in this implementation may be specifically a user plane integrity protection key. Before sending user plane data, the user equipment or the secondary eNodeB performs integrity protection on the user plane data according to the generated user plane integrity protection key, so that the data cannot be tampered in a sending process. Correspondingly, after receiving the user plane data, the user equipment or the secondary eNodeB checks integrity of the user plane data according to the generated user plane integrity protection key, so as to ensure that the user plane data is not tampered.

According to the used secondary eNodeB provided in Implementation 4 of the present disclosure, a user plane key between user equipment and the secondary eNodeB is separately generated by the user equipment and the secondary eNodeB, so that load of a master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

In hardware implementation, the foregoing sending unit 420 may be a transmitter or a transceiver, the foregoing receiving unit 430 may be a receiver or a transceiver, and the sending unit 420 and the receiving unit 430 may be integrated to constitute a transceiver unit, which is a transceiver corresponding to the hardware implementation. The foregoing determining unit 410 and the generating unit 440 may be built in or independent of a processor of the secondary eNodeB in a hardware form, or may be stored in a memory of the secondary eNodeB in a software form, so that the processor invokes and executes an operation corresponding to each of the foregoing modules. The processor may be a central processing unit (CPU), a microprocessor, a single-chip microcomputer, or the like.

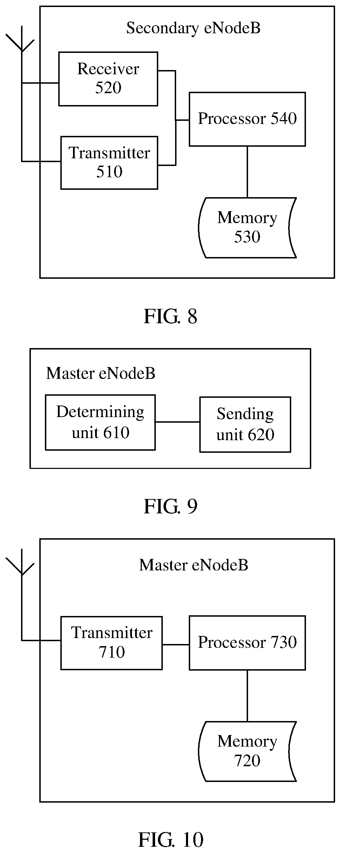

As shown in FIG. 8, FIG. 8 is a schematic structural diagram of a secondary eNodeB according to Implementation 5 of the present disclosure. The secondary eNodeB includes a transmitter 510, a receiver 520, a memory 530, and a processor 540 separately connected to the transmitter 510, the receiver 520, and the memory 530. Certainly, the secondary eNodeB may further include general components, such as an antenna, a baseband processing component, an intermediate radio frequency processing component, and an input and output apparatus. This implementation of the present disclosure sets no limitation thereto. The secondary eNodeB is a small cell, and the small cell is specifically a micro base station or a femto base station configured to implement the key generation method provided in Implementation 1 of the present disclosure.

The memory 530 stores a set of program code, and the processor 540 is configured to invoke the program code stored in the memory 530, so as to execute the following operations:
determining a key parameter corresponding to a DRB;
sending the key parameter to user equipment corresponding to the DRB, so that the user equipment generates a user plane key according to the key parameter and a basic key generated by the user equipment;
receiving a basic key generated by a master eNodeB and sent by the master eNodeB; and
generating the user plane key according to the key parameter and the basic key generated by the master eNodeB; where
the basic key generated by the user equipment and the basic key generated by the master eNodeB are the same.

Further, the determining a key parameter corresponding to a DRB is specifically:
allocating or generating a key parameter for the DRB, where the key parameter includes at least one of the following parameters: a DRB ID, a random number, or a counter value.

Further, the processor 540 is configured to invoke the program code stored in the memory 530, so as to further execute the following operations:
before the determining a key parameter corresponding to a DRB, receiving a DRB establishing or adding request sent by the master eNodeB, where the DRB establishing or adding request carries the key parameter; and the determining a key parameter corresponding to a DRB is specifically: obtaining the key parameter from the DRB establishing or adding request, where the key parameter includes a DRB ID.

Further, the sending the key parameter to user equipment corresponding to the DRB is specifically:
sending the key parameter to the user equipment by using the master eNodeB.

Further, the user plane key is a user plane cipher key or a user plane integrity protection key.

The master eNodeB is a macro base station.

According to the used secondary eNodeB provided in Implementation 5 of the present disclosure, a user plane key between user equipment and the secondary eNodeB is separately generated by the user equipment and the secondary eNodeB, so that load of a master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

The following uses FIG. 9 as an example to describe in detail a master eNodeB provided in Implementation 6 of the present disclosure. FIG. 9 is a schematic structural diagram of a master eNodeB according to Implementation 6 of the present disclosure. The master eNodeB is a macro base station configured to implement the key generation method provided in Implementation 2 of the present disclosure.

As shown in FIG. 9, the master eNodeB includes: a determining unit 610 and a sending unit 620.

The determining unit 610 is configured to determine a key parameter corresponding to a DRB.

The key parameter includes a DRB ID.

Specifically, after user equipment establishes an RRC connection to the master eNodeB, the master eNodeB allocates a DRB to the user equipment, and the determining unit 610 allocates a DRB ID to the DRB. A DRB ID of each DRB is unique, and therefore the determining unit 610 uses the DRB ID as a key parameter corresponding to the DRB.

The sending unit 620 is configured to send the key parameter to user equipment corresponding to the DRB.

After receiving the key parameter sent by a secondary eNodeB, the user equipment performs, by using a key derivation function KDF, calculation on the key parameter and a basic key (for example, a secondary eNodeB key S-KeNB) generated by the user equipment, so as to generate a user plane key.

The secondary eNodeB is a small cell, and the small cell is specifically a micro base station or a femto base station.

The sending unit 620 is further configured to send the key parameter and a basic key generated by the master eNodeB to the secondary eNodeB.

The basic key generated by the user equipment and the basic key generated by the master eNodeB are the same.

Specifically, the user equipment and the master eNodeB separately perform calculation on a same shared key (for example, a base station key KeNB) and a same shared key parameter by using the key derivation function KDF, so as to generate a basic key. Therefore, the basic key generated by the user equipment and the basic key generated by the master eNodeB are the same.

The secondary eNodeB generates, in a same manner in which the user equipment generates a user plane key, a user plane key according to the key parameter and the basic key generated by the master eNodeB. Because the basic key generated by the user equipment and the basic key generated by the master eNodeB are the same, and a same user plane key generation manner is used, the user plane key generated by the user equipment and the user plane key generated by the secondary eNodeB are the same.

Optionally, the user plane key generated in this implementation may be specifically a user plane cipher key. Before sending user plane data, the user equipment or the secondary eNodeB encrypts, according to the generated user plane cipher key, the user plane data to form a ciphertext, so that the data cannot be cracked in a sending process. Correspondingly, after receiving the user plane data, the user equipment or the secondary eNodeB decrypts the user plane data according to the generated user plane cipher key to obtain original user plane data.

Optionally, the user plane key generated in this implementation may be specifically a user plane integrity protection key. Before sending user plane data, the user equipment or the secondary eNodeB performs integrity protection on the user plane data according to the generated user plane integrity protection key, so that the data cannot be tampered in a sending process. Correspondingly, after receiving the user plane data, the user equipment or the secondary eNodeB checks integrity of the user plane data according to the generated user plane integrity protection key, so as to ensure that the user plane data is not tampered.

According to the used master eNodeB provided in Implementation 6 of the present disclosure, a user plane key between user equipment and a secondary eNodeB is separately generated by the user equipment and the secondary eNodeB, so that load of the master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

In hardware implementation, the foregoing sending unit 620 may be a transmitter or a transceiver, and the foregoing determining unit 610 may be built in or independent of a processor of the master eNodeB in a hardware form, or may be stored in a memory of the master eNodeB in a software form, so that the processor invokes and executes an operation corresponding to each of the foregoing modules. The processor may be a central processing unit (CPU), a microprocessor, a single-chip microcomputer, or the like.

As shown in FIG. 10, FIG. 10 is a schematic structural diagram of a master eNodeB according to Implementation 7 of the present disclosure. The master eNodeB includes a transmitter 710, a memory 720, and a processor 730 separately connected to the transmitter 710 and the memory 720. Certainly, the master eNodeB may further include general components, such as an antenna, a baseband processing component, an intermediate radio frequency processing component, and an input and output apparatus. This implementation of the present disclosure sets no limitation thereto. The master eNodeB is a macro base station configured to implement the key generation method provided in Implementation 2 of the present disclosure.

The memory 720 stores a set of program code, and the processor 730 is configured to invoke the program code stored in the memory 720, so as to execute the following operations:
determining a key parameter corresponding to a DRB;
sending the key parameter to user equipment corresponding to the DRB, so that the user equipment generates a user plane key according to the key parameter and a basic key generated by the user equipment; and
sending the key parameter and a basic key generated by the master eNodeB to the secondary eNodeB, so that the secondary eNodeB generates the user plane key according to the key parameter and the basic key generated by the master eNodeB; where
the basic key generated by the user equipment and the basic key generated by the master eNodeB are the same.

Further, the key parameter includes a DRB ID.

Further, the user plane key is a user plane cipher key or a user plane integrity protection key.

The secondary eNodeB is a small cell, and the small cell is specifically a micro base station or a femto base station.

According to the used master eNodeB provided in Implementation 7 of the present disclosure, a user plane key between user equipment and a secondary eNodeB is separately generated by the user equipment and the secondary eNodeB, so that load of the master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

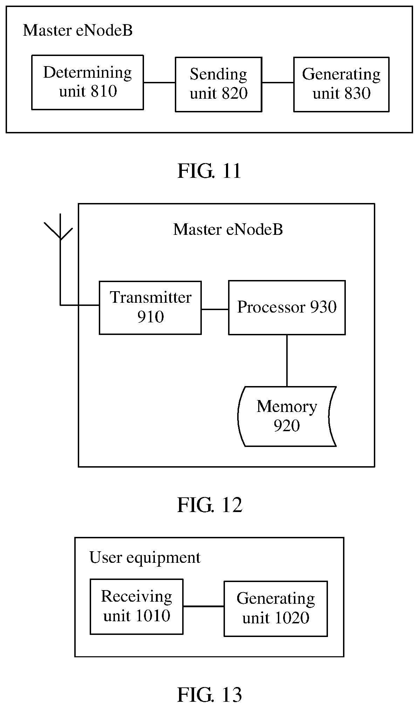

The following uses FIG. 11 as an example to describe in detail a master eNodeB provided in Implementation 8 of the present disclosure. FIG. 11 is a schematic structural diagram of a master eNodeB according to Implementation 8 of the present disclosure. The master eNodeB is a macro base station configured to implement the key generation method provided in Implementation 3 of the present disclosure.

As shown in FIG. 11, the master eNodeB includes: a determining unit 810, a sending unit 820, and a generating unit 830.

The determining unit 810 is configured to determine a key parameter corresponding to a DRB.

The key parameter includes a DRB ID.

Specifically, after user equipment establishes an RRC connection to the master eNodeB, the master eNodeB allocates a DRB to the user equipment, and the determining unit 810 allocates a DRB ID to the DRB. A DRB ID of each DRB is unique, and therefore the determining unit 810 uses the DRB ID as a key parameter corresponding to the DRB.

The sending unit 820 is configured to send the key parameter to user equipment corresponding to the DRB.

After receiving the key parameter sent by a secondary eNodeB, the user equipment performs, by using a key derivation function KDF, calculation on the key parameter and a basic key (for example, a secondary eNodeB key S-KeNB) generated by the user equipment, so as to generate a user plane key.

The secondary eNodeB is a small cell, and the small cell is specifically a micro base station or a femto base station.

The generating unit 830 is configured to generate a user plane key according to the key parameter and a basic key generated by the master eNodeB.

The basic key generated by the user equipment and the basic key generated by the master eNodeB are the same.

Specifically, the user equipment and the master eNodeB separately perform calculation on a same shared key (for example, a base station key KeNB) and a same shared key parameter by using the key derivation function KDF, so as to generate a basic key. Therefore, the basic key generated by the user equipment and the basic key generated by the master eNodeB are the same.

The generating unit 830 generates, in a same manner in which the user equipment generates a user plane key, the user plane key according to the key parameter and the basic key generated by the master eNodeB. Because the basic key generated by the user equipment and the basic key generated by the master eNodeB are the same, and a same user plane key generation manner is used, the user plane key generated by the user equipment and the user plane key generated by the generating unit 830 are the same.

The sending unit 820 is further configured to send the generated user plane key to the secondary eNodeB.

The secondary eNodeB uses the user plane key sent by the master eNodeB as a user plane key between the user equipment and the secondary eNodeB.

Optionally, the user plane key generated in this implementation may be specifically a user plane cipher key. Before sending user plane data, the user equipment or the secondary eNodeB encrypts, according to the generated user plane cipher key, the user plane data to form a ciphertext, so that the data cannot be cracked in a sending process. Correspondingly, after receiving the user plane data, the user equipment or the secondary eNodeB decrypts the user plane data according to the generated user plane cipher key to obtain original user plane data.

Optionally, the user plane key generated in this implementation may be specifically a user plane integrity protection key. Before sending user plane data, the user equipment or the secondary eNodeB performs integrity protection on the user plane data according to the generated user plane integrity protection key, so that the data cannot be tampered in a sending process. Correspondingly, after receiving the user plane data, the user equipment or the secondary eNodeB checks integrity of the user plane data according to the generated user plane integrity protection key, so as to ensure that the user plane data is not tampered.

According to the used master eNodeB provided in Implementation 8 of the present disclosure, a user plane key between user equipment and a secondary eNodeB is separately generated by the user equipment and the master eNodeB, so that load of the master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

In hardware implementation, the foregoing sending unit 820 may be a transmitter or a transceiver, and the foregoing determining unit 810 and the generating unit 830 may be built in or independent of a processor of the master eNodeB in a hardware form, or may be stored in a memory of the master eNodeB in a software form, so that the processor invokes and executes an operation corresponding to each of the foregoing modules. The processor may be a central processing unit (CPU), a microprocessor, a single-chip microcomputer, or the like.

As shown in FIG. 12, FIG. 12 is a schematic structural diagram of a master eNodeB according to Implementation 9 of the present disclosure. The master eNodeB includes a transmitter 910, a memory 920, and a processor 930 separately connected to the transmitter 910 and the memory 920. Certainly, the master eNodeB may further include general components, such as an antenna, a baseband processing component, an intermediate radio frequency processing component, and an input and output apparatus. This implementation of the present disclosure sets no limitation thereto. The master eNodeB is a macro base station configured to implement the key generation method provided in Implementation 2 of the present disclosure.

The memory 920 stores a set of program code, and the processor 930 is configured to invoke the program code stored in the memory 920, so as to execute the following operations:
determining a key parameter corresponding to a DRB;
sending the key parameter to user equipment corresponding to the DRB, so that the user equipment generates a user plane key according to the key parameter and a basic key generated by the user equipment;
generating the user plane key according to the key parameter and a basic key generated by the master eNodeB; and
sending the user plane key to a secondary eNodeB; where
the basic key generated by the user equipment and the basic key generated by the master eNodeB are the same.

Further, the key parameter includes a DRB ID.

Further, the user plane key is a user plane cipher key or a user plane integrity protection key.

The secondary eNodeB is a small cell, and the small cell is specifically a micro base station or a femto base station. According to the used master eNodeB provided in Implementation 9 of the present disclosure, a user plane key between user equipment and a secondary eNodeB is separately generated by the user equipment and the master eNodeB, so that load of the master eNodeB may be effectively reduced. In addition, because key parameters of different user equipment are different, user plane keys between the secondary eNodeB and the different user equipment are different; because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

The following uses FIG. 13 as an example to describe in detail user equipment provided in Implementation 10 of the present disclosure. FIG. 13 is a schematic structural diagram of user equipment according to Implementation 10 of the present disclosure. The user equipment may be user equipment described in Implementation 1, Implementation 2, or Implementation 3.

As shown in FIG. 13, the user equipment includes: a receiving unit 1010 and a generating unit 1020.

The receiving unit 1010 is configured to receive a key parameter corresponding to a DRB sent by a master eNodeB or a secondary eNodeB.

The master eNodeB is a macro base station. The secondary eNodeB is a small cell, and the small cell is specifically a micro base station or a femto base station.

Specifically, the key parameter may be allocated by the secondary eNodeB or the master eNodeB.

Optionally, if the key parameter is allocated by the secondary eNodeB, the key parameter includes at least one of the following parameters: a DRB ID, a random number, or a counter value.

Specifically, after the user equipment establishes an RRC connection to the master eNodeB, the secondary eNodeB receives a DRB establishing or adding request sent by the master eNodeB. After receiving the DRB establishing or adding request, the secondary eNodeB allocates a DRB to the user equipment and allocates a DRB ID to the DRB. A DRB ID of each DRB is unique, and therefore the DRB ID may be used as a key parameter corresponding to the DRB.

The secondary eNodeB may include a random number generator. After the user equipment establishes the RRC connection to the master eNodeB, the secondary eNodeB receives a DRB establishing or adding request sent by the master eNodeB. After receiving the DRB establishing or adding request, the secondary eNodeB allocates a DRB to the user equipment, and then the random number generator generates a random number for the DRB. Each random number generated by the random number generator is unique, and therefore the random number may be used as a key parameter corresponding to the DRB.

The secondary eNodeB may further include a counter. After the user equipment establishes the RRC connection to the master eNodeB, the secondary eNodeB receives a DRB establishing or adding request sent by the master eNodeB. After receiving the DRB establishing or adding request, the secondary eNodeB allocates a DRB to the user equipment, and then the counter generates a counter value for the DRB. Each counter value generated by the counter is unique, and therefore the counter value may be used as a key parameter corresponding to the DRB.

After allocating the key parameter, the secondary eNodeB may directly send the key parameter to the user equipment; or first send the key parameter to the master eNodeB, and the master eNodeB forwards the key parameter to the user equipment.

Optionally, if the key parameter is allocated by the master eNodeB, the key parameter includes only a DRB ID.

Specifically, after the user equipment establishes an RRC connection to the master eNodeB, the master eNodeB allocates a DRB to the user equipment. A DRB ID of each DRB is unique, and therefore the DRB ID may be used as a key parameter corresponding to the DRB.

After allocating the key parameter, the master eNodeB may directly send the key parameter to the user equipment; or first send the key parameter to the secondary eNodeB, and the secondary eNodeB forwards the key parameter to the user equipment.

The generating unit 1020 is configured to generate a user plane key according to the key parameter and a basic key.

After the receiving unit 1010 receives the key parameter, the generating unit 1020 performs, by using a key derivation function KDF, calculation on the key parameter and a basic key (for example, a secondary eNodeB key S-KeNB) generated by the user equipment, so as to generate a user plane key.

Correspondingly, a user plane key of the secondary eNodeB is generated by the secondary eNodeB or the master eNodeB. The secondary eNodeB or the master eNodeB generates the user plane key according to the key parameter and a basic key generated by the master eNodeB.

The basic key generated by the user equipment and the basic key generated by the master eNodeB are the same.

Specifically, the user equipment and the master eNodeB separately perform calculation on a same shared key (for example, a base station key KeNB) and a same shared key parameter by using the key derivation function KDF, so as to generate a basic key. Therefore, the basic key generated by the user equipment and the basic key generated by the master eNodeB are the same.

In addition, the secondary eNodeB or the master eNodeB generates, in a same manner in which the user equipment generates a user plane key, the user plane key according to the key parameter and the basic key generated by the master eNodeB. Because the basic key generated by the user equipment and the basic key generated by the secondary eNodeB or the master eNodeB are the same, and a same user plane key generation manner is used, the user plane key generated by the user equipment and the user plane key generated by the secondary eNodeB or the master eNodeB are the same.

Optionally, the user plane key generated in this implementation may be specifically a user plane cipher key. Before sending user plane data, the user equipment or the secondary eNodeB encrypts, according to the generated user plane cipher key, the user plane data to form a ciphertext, so that the data cannot be cracked in a sending process. Correspondingly, after receiving the user plane data, the user equipment or the secondary eNodeB decrypts the user plane data according to the generated user plane cipher key to obtain original user plane data.

Optionally, the user plane key generated in this implementation may be specifically a user plane integrity protection key. Before sending user plane data, the user equipment or the secondary eNodeB performs integrity protection on the user plane data according to the generated user plane integrity protection key, so that the data cannot be tampered in a sending process. Correspondingly, after receiving the user plane data, the user equipment or the secondary eNodeB checks integrity of the user plane data according to the generated user plane integrity protection key, so as to ensure that the user plane data is not tampered.

According to the used user equipment provided in Implementation 10 of the present disclosure, a user plane key between the user equipment and a secondary eNodeB is separately generated by the user equipment and the secondary eNodeB, or separately generated by the user equipment and a master eNodeB, so that load of the master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

In hardware implementation, the foregoing receiving unit 1010 may be a receiver or a transceiver, and the foregoing generating unit 1020 may be built in or independent of a processor of the user equipment in a hardware form, or may be stored in a memory of the user equipment in a software form, so that the processor invokes and executes an operation corresponding to each of the foregoing modules. The processor may be a central processing unit (CPU), a microprocessor, a single-chip microcomputer, or the like.

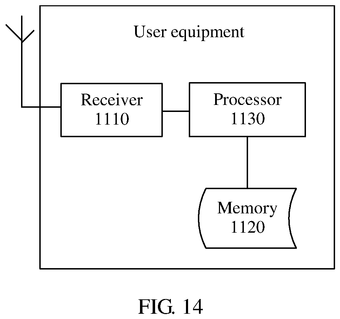

As shown in FIG. 14, FIG. 14 is a schematic structural diagram of user equipment according to Implementation 11 of the present disclosure. The user equipment includes a receiver 1110, a memory 1120, and a processor 1130 separately connected to the receiver 1110 and the memory 1120. Certainly, the user equipment may further include general components, such as an antenna, a baseband processing component, an intermediate radio frequency processing component, and an input and output apparatus. This implementation of the present disclosure sets no limitation thereto. The user equipment may be user equipment described in Implementation 1, Implementation 2, or Implementation 3.

The memory 1120 stores a set of program code, and the processor 1130 is configured to invoke the program code stored in the memory 1120, so as to execute the following operations:
receiving a key parameter corresponding to a DRB sent by a master eNodeB or a secondary eNodeB; and
generating a user plane key according to the key parameter and a basic key.

Further, the key parameter includes at least one of the following parameters: a DRB ID, a random number, or a counter value.

Further, the user plane key is a user plane cipher key or a user plane integrity protection key.

The master eNodeB is a macro base station. The secondary eNodeB is a small cell, and the small cell is specifically a micro base station or a femto base station. According to the used user equipment provided in Implementation 11 of the present disclosure, a user plane key between the user equipment and a secondary eNodeB is separately generated by the user equipment and the secondary eNodeB, or separately generated by the user equipment and a master eNodeB, so that load of the master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

A person skilled in the art may be further aware that, in combination with the examples described in the implementations disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present disclosure.

Steps of methods or algorithms described in the implementations disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The scope of protection shall be defined by the appended claims.

## Claims

1. A key generation method, comprising:
determining (S101), by a secondary base station, a key parameter corresponding to a data radio bearer, DRB;
sending (S102), by the secondary base station, the key parameter to user equipment corresponding to the DRB, whereby the user equipment generates a user plane key according to the key parameter and a basic key generated by the user equipment;
receiving (S103), by the secondary base station, a basic key generated by the master base station and sent by the master base station; wherein the basic key generated by the user equipment and the basic key generated by the master base station are the same; and
generating (S104), by the secondary base station, the user plane key according to the key parameter and the basic key generated by the master base station; wherein the user plane key generated by the user equipment and the user plane key generated by the secondary base station are the same.

2. The key generation method according to claim 1, wherein the user plane key comprises a user plane integrity protection key; wherein the method further comprises:
performing, by the secondary base station, integrity protection on user plane data according to the user plane integrity protection key; and
sending, by the secondary base station, to the UE, the protected user plane data;
and wherein the method further comprises:
receiving, by the UE, protected user plane data from the secondary base station; and
checking, by the UE, the protected user plane data by using the user plane integrity protection key.

3. The method according to claim 1 or 2, wherein the user plane key comprises a user plane cipher key; wherein the method further comprises:
encrypting, by the secondary base station, user plane data according to the user plane cipher key; and
sending, by the secondary base station, the encrypted user plane data to the UE.

4. The method according to any one of claims 1 to 3, wherein before the determining, by a secondary base station, a key parameter corresponding to a DRB, the method further comprises:
receiving, by the secondary base station, a DRB establishing or adding request sent by the master base station, wherein the DRB establishing or adding request carries the key parameter; and
the determining, by the secondary base station, a key parameter corresponding to a DRB is specifically:
obtaining, by the secondary base station, the key parameter from the DRB establishing or adding request.

5. The method according to any one of claims 1 to 4, wherein the sending, by the secondary base station, the key parameter to user equipment corresponding to the DRB is specifically:
sending, by the secondary base station, the key parameter to the user equipment by using the master base station.

6. A key generation method, comprising:
receiving, by a user equipment, UE, a key parameter from a master base station;
generating, by the UE, the user plane key according to a basic key and the key parameter; wherein the basic key is generated based on a same shared key and a same shared key parameter between the UE and the master base station; wherein the same shared key is a base station key of the master base station; wherein the user plane key is the same as a user plane key of the secondary base station.

7. The key generation method according to claim 6, wherein the user plane key comprises a user plane integrity protection key; wherein the method further comprises:
performing, by the UE, integrity protection on user plane data according to the user plane integrity protection key; and
sending, by the UE, the protected user plane data to a secondary base station;
and wherein the method further comprises:
receiving, by the UE, protected user plane data from the secondary base station; and
checking, by the UE, the protected user plane data by using the user plane integrity protection key.

8. The key generation method according to claim 6 or 7, wherein the user plane key comprises a user plane cipher key and wherein the method further comprises :
encrypting, by the UE, user plane data according to the user plane cipher key; and
sending, by the UE, the encrypted user plane data to the secondary base station.

9. The key generation method according to claim 8, further comprising:
receiving, by the LTE, encrypted user plane data from the secondary base station; and
decrypting, by the UE the encrypted user plane data by using the user plane cipher key.

10. The key generation method according to any one of claims 6 to 9, wherein the basic key is the same as a basic key of the secondary base station.

11. An apparatus, comprising:
a determining unit (410), configured to determine a key parameter corresponding to a data radio bearer, DRB;
a sending unit (420), configured to send the key parameter to user equipment corresponding to the DRB, whereby the user equipment generates a user plane key according to the key parameter and a basic key generated by the user equipment;
a receiving unit (430), configured to receive a basic key generated by the master base station and sent by the master base station; wherein the basic key generated by the user equipment and the basic key generated by the master base station are the same; and
a generating unit (440), configured to generate the user plane key according to the key parameter and the basic key generated by the master base station; wherein the user plane key generated by the user equipment and the user plane key generated by the secondary base station are the same.

12. The apparatus according to claim 11, wherein the user plane key comprises a user plane integrity protection key; wherein the apparatus is further configured to:
perform integrity protection on user plane data according to the user plane integrity protection key; and
send to the UE, the protected user plane data;
and wherein the LTE is further configured to:
receive protected user plane data from the secondary base station; and
check the protected user plane data by using the user plane integrity protection key.

13. The apparatus according to claim 12, wherein the user plane key comprises a user plane cipher key; wherein the apparatus is further configured to:
encrypt user plane data according to the user plane cipher key; and
send the encrypted user plane data to the UE.

14. The apparatus according to any one of claims 11 to 13, wherein the receiving unit is further configured to receive a DRB establishing or adding request sent by the master base station, wherein the DRB establishing or adding request carries the key parameter; and
wherein the determining unit is specifically configured to obtain the key parameter from the DRB establishing or adding request.

15. The apparatus according to any one of claims 11 to 14, wherein the sending unit is specifically configured to send the key parameter to the user equipment by using the master base station.

16. User equipment, UE, comprising:
receiving unit (1010), configured to receive a key parameter from a secondary base station through a master base station;
generating unit (1020), configured to generate the user plane key according to a basic key and the key parameter; wherein the basic key is generated based on a same shared key and a same shared key parameter between the UE and the master base station; wherein the same shared key is a base station key of the master base station; wherein the user plane key is the same as a user plane key of the secondary base station.

17. The UE according to claim 16, wherein the user plane key comprises a user plane integrity protection key; wherein the LTE is specifically configured to:
perform integrity protection on user plane data according to the user plane integrity protection key; and
send the protected user plane data to a secondary base station;
and wherein the LTE is further configured to:
receive protected user plane data from the secondary base station; and
check the protected user plane data by using the user plane integrity protection key.

18. The UE according to claim 16 or 17, wherein the user plane key comprises a user plane cipher key and wherein the UE is further configured to:
encrypt user plane data according to the user plane cipher key; and
send the encrypted user plane data to the secondary base station.

19. The UE according to claim 18, wherein the UE is further configured to: receive encrypted user plane data from the secondary base station; and
decrypt the encrypted user plane data by using the user plane cipher key.

20. The UE according to any one of claims 16 to 19, wherein the basic key is the same as a basic key of the secondary base station.

## Patentansprüche

1. Schlüsselerzeugungsverfahren, umfassend:
Bestimmen (S101), durch eine sekundäre Basisstation, eines Schlüsselparameters, der einem "Data Radio Bearer", DRB, entspricht;
Senden (S102), durch die sekundäre Basisstation, des Schlüsselparameters an das dem DRB entsprechende Benutzergerät, wobei das Benutzergerät einen Benutzerebenenschlüssel gemäß dem Schlüsselparameter und einem vom Benutzergerät erzeugten Basisschlüssel erzeugt;
Empfangen (S103), durch die sekundäre Basisstation, eines von der Hauptbasisstation erzeugten und von der Hauptbasisstation gesendeten Basisschlüssels; wobei der vom Benutzergerät erzeugte Basisschlüssel und der von der Hauptbasisstation erzeugte Basisschlüssel gleich sind; und
Erzeugen (S104), durch die sekundäre Basisstation, des Benutzerebenenschlüssels gemäß dem Schlüsselparameter und dem von der Hauptbasisstation erzeugten Basisschlüssel; wobei der vom Benutzergerät erzeugte Benutzerebenenschlüssel und der von der sekundären Basisstation erzeugte Benutzerebenenschlüssel gleich sind.

2. Schlüsselerzeugungsverfahren nach Anspruch 1, wobei der Benutzerebenenschlüssel einen Benutzerebenenintegritätsschutzschlüssel umfasst; wobei das Verfahren ferner umfasst:
Durchführen, durch die sekundäre Basisstation, von Integritätsschutz an Benutzerebenendaten gemäß dem Benutzerebenenintegritätsschutzschlüssel; und
Senden, durch die sekundäre Basisstation, an das UE, der geschützten Benutzerebenendaten;
und wobei das Verfahren ferner umfasst:
Empfangen, durch das UE, von geschützten Benutzerebenendaten von der sekundären Basisstation; und
Überprüfen, durch das UE, der geschützten Benutzerebenendaten unter Verwendung des Benutzerebenenintegritätsschutzschlüssels.

3. Verfahren nach Anspruch 1 oder 2, wobei der Benutzerebenenschlüssel einen Benutzerebenenchiffrierschlüssel umfasst; wobei das Verfahren ferner umfasst:
Verschlüsseln, durch die sekundäre Basisstation, von Benutzerebenendaten gemäß dem Benutzerebenenchiffrierschlüssel; und
Senden, durch die sekundäre Basisstation, der verschlüsselten Benutzerebenendaten an das UE.

4. Verfahren nach einem der Ansprüche 1 bis 3, wobei das Verfahren vor dem Bestimmen, durch eine sekundäre Basisstation, eines einem DRB entsprechenden Schlüsselparameters ferner umfasst:
Empfangen, durch die sekundäre Basisstation, einer Anforderung zum Einrichten oder Hinzufügen eines DRB, die von der Hauptbasisstation gesendet wird, wobei die Anforderung zum Einrichten oder Hinzufügen eines DRB den Schlüsselparameter trägt; und
das Bestimmen, durch die sekundäre Basisstation, eines einem DRB entsprechenden Schlüsselparameters spezifisch in folgendem Vorgang besteht:
Erhalten, durch die sekundäre Basisstation, des Schlüsselparameters aus der Anforderung zum Einrichten oder Hinzufügen eines DRB.

5. Verfahren nach einem der Ansprüche 1 bis 4, wobei das Senden, durch die sekundäre Basisstation, des Schlüsselparameters an das dem DRB entsprechende Benutzergerät spezifisch in folgendem Vorgang besteht:
Senden, durch die sekundäre Basisstation, des Schlüsselparameters an das Benutzergerät unter Verwendung der Hauptbasisstation.

6. Schlüsselerzeugungsverfahren, umfassend:
Empfangen, durch ein Benutzergerät, UE, eines Schlüsselparameters von einer Hauptbasisstation;
Erzeugen, durch das UE, des Benutzerebenenschlüssels gemäß einem Basisschlüssel und dem Schlüsselparameter; wobei der Basisschlüssel auf der Grundlage eines gleichen gemeinsamen Schlüssels und eines gleichen gemeinsamen Schlüsselparameters zwischen dem UE und der Hauptbasisstation erzeugt wird; wobei der gleiche gemeinsame Schlüssel ein Basisstationsschlüssel der Hauptbasisstation ist; wobei der Benutzerebenenschlüssel der gleiche wie ein Benutzerebenenschlüssel der sekundären Basisstation ist.

7. Schlüsselerzeugungsverfahren nach Anspruch 6, wobei der Benutzerebenenschlüssel einen Benutzerebenenintegritätsschutzschlüssel umfasst; wobei das Verfahren ferner umfasst:
Durchführen, durch das UE, von Integritätsschutz an Benutzerebenendaten gemäß dem Benutzerebenenintegritätsschutzschlüssel; und
Senden, durch das UE, der geschützten Benutzerebenendaten an eine sekundäre Basisstation;
und wobei das Verfahren ferner umfasst:
Empfangen, durch das UE, von geschützten Benutzerebenendaten von der sekundären Basisstation; und
Überprüfen, durch das UE, der geschützten Benutzerebenendaten unter Verwendung des Benutzerebenenintegritätsschutzschlüssels.

8. Schlüsselerzeugungsverfahren nach Anspruch 6 oder 7, wobei der Benutzerebenenschlüssel einen Benutzerebenenchiffrierschlüssel umfasst und wobei das Verfahren ferner umfasst:
Verschlüsseln, durch das UE, von Benutzerebenendaten gemäß dem Benutzerebenenchiffrierschlüssel; und
Senden, durch das UE, der verschlüsselten Benutzerebenendaten an die sekundäre Basisstation.

9. Schlüsselerzeugungsverfahren nach Anspruch 8, ferner umfassend:
Empfangen, durch das UE, von verschlüsselten Benutzerebenendaten von der sekundären Basisstation; und
Entschlüsseln, durch das UE, der verschlüsselten Benutzerebenendaten unter Verwendung des Benutzerebenenchiffrierschlüssels.

10. Schlüsselerzeugungsverfahren nach einem der Ansprüche 6 bis 9, wobei der Basisschlüssel der gleiche ist wie ein Basisschlüssel der sekundären Basisstation.

11. Vorrichtung, umfassend:
eine Bestimmungseinheit (410), die dafür ausgelegt ist, einen einem "Data Radio Bearer", DRB, entsprechenden Schlüsselparameter zu bestimmen;
eine Sendeeinheit (420), die dafür ausgelegt ist, den Schlüsselparameter an ein dem DRB entsprechendes Benutzergerät zu senden, wobei das Benutzergerät einen Benutzerebenenschlüssel gemäß dem Schlüsselparameter und einem vom Benutzergerät erzeugten Basisschlüssel erzeugt;
eine Empfangseinheit (430), die dafür ausgelegt ist, einen von der Hauptbasisstation erzeugten und von der Hauptbasisstation gesendeten Basisschlüssel zu empfangen;
wobei der vom Benutzergerät erzeugte Basisschlüssel und der von der Hauptbasisstation erzeugte Basisschlüssel gleich sind; und
eine Erzeugungseinheit (440), die dafür ausgelegt ist, den Benutzerebenenschlüssel gemäß dem Schlüsselparameter und dem von der Hauptbasisstation erzeugten Basisschlüssel zu erzeugen; wobei der vom Benutzergerät erzeugte Benutzerebenenschlüssel und der von der sekundären Basisstation erzeugte Benutzerebenenschlüssel gleich sind.

12. Vorrichtung nach Anspruch 11, wobei der Benutzerebenenschlüssel einen Benutzerebenenintegritätsschutzschlüssel umfasst; wobei die Vorrichtung ferner für folgende Vorgänge ausgelegt ist:
Durchführen von Integritätsschutz an Benutzerebenendaten gemäß dem Benutzerebenenintegritätsschutzschlüssel; und
Senden, an das UE, der geschützten Benutzerebenendaten;
und wobei die Vorrichtung ferner für folgende Vorgänge ausgelegt ist:
Empfangen von geschützten Benutzerebenendaten von der sekundären Basisstation; und
Überprüfen der geschützten Benutzerebenendaten unter Verwendung des Benutzerebenenintegritätsschutzschlüssels.

13. Vorrichtung nach Anspruch 12, wobei der Benutzerebenenschlüssel einen Benutzerebenenchiffrierschlüssel umfasst; wobei die Vorrichtung ferner für folgende Vorgänge ausgelegt ist:
Verschlüsseln von Benutzerebenendaten gemäß dem Benutzerebenenchiffrierschlüssel; und
Senden der verschlüsselten Benutzerebenendaten an das UE.

14. Vorrichtung nach einem der Ansprüche 11 bis 13, wobei die Empfangseinheit ferner dafür ausgelegt ist, eine von der Hauptbasisstation gesendete Anforderung zum Einrichten oder Hinzufügen eines DRB zu empfangen, wobei die Anforderung zum Einrichten oder Hinzufügen eines DRB den Schlüsselparameter trägt; und
wobei die Bestimmungseinheit spezifisch dafür ausgelegt ist, den Schlüsselparameter aus der Anforderung zum Einrichten oder Hinzufügen eines DRB zu erhalten.

15. Vorrichtung nach einem der Ansprüche 11 bis 14, wobei die Sendeeinheit spezifisch dafür ausgelegt ist, den Schlüsselparameter an das Benutzergerät unter Verwendung der Hauptbasisstation zu senden.

16. Benutzergerät, UE, umfassend:
Empfangseinheit (1010), die dafür ausgelegt ist, einen Schlüsselparameter von einer sekundären Basisstation über eine Hauptbasisstation zu empfangen;
Erzeugungseinheit (1020), die dafür ausgelegt ist, den Benutzerebenenschlüssel gemäß einem Basisschlüssel und dem Schlüsselparameter zu erzeugen; wobei der Basisschlüssel auf der Grundlage eines gleichen gemeinsamen Schlüssels und eines gleichen gemeinsamen Schlüsselparameters zwischen dem UE und der Hauptbasisstation erzeugt wird; wobei der gleiche gemeinsame Schlüssel ein Basisstationsschlüssel der Hauptbasisstation ist; wobei der Benutzerebenenschlüssel der gleiche wie ein Benutzerebenenschlüssel der sekundären Basisstation ist.

17. UE nach Anspruch 16, wobei der Benutzerebenenschlüssel einen Benutzerebenenintegritätsschutzschlüssel umfasst; wobei das UE ferner spezifisch für folgende Vorgänge ausgelegt ist:
Durchführen von Integritätsschutz an Benutzerebenendaten gemäß dem Benutzerebenenintegritätsschutzschlüssel; und
Senden der geschützten Benutzerebenendaten an eine sekundäre Basisstation;
und wobei das UE ferner für folgende Vorgänge ausgelegt ist:
Empfangen von geschützten Benutzerebenendaten von der sekundären Basisstation; und
Überprüfen der geschützten Benutzerebenendaten unter Verwendung des Benutzerebenenintegritätsschutzschlüssels.

18. UE nach Anspruch 16 oder 17, wobei der Benutzerebenenschlüssel einen Benutzerebenenchiffrierschlüssel umfasst; und wobei das UE ferner für folgende Vorgänge ausgelegt ist:
Verschlüsseln von Benutzerebenendaten gemäß dem Benutzerebenenchiffrierschlüssel; und
Senden der verschlüsselten Benutzerebenendaten an die sekundäre Basisstation.

19. UE nach Anspruch 18, wobei das UE ferner für folgende Vorgänge ausgelegt ist:
Empfangen von verschlüsselten Benutzerebenendaten von der sekundären Basisstation; und
Entschlüsseln der verschlüsselten Benutzerebenendaten unter Verwendung des Benutzerebenenchiffrierschlüssels.

20. UE nach einem der Ansprüche 16 bis 19, wobei der Basisschlüssel der gleiche ist wie ein Basisschlüssel der sekundären Basisstation.

## Revendications

1. Procédé de génération de clé, comprenant :
la détermination (S101), par une station de base secondaire, d'un paramètre de clé correspondant à un support radio de données, DRB ;
l'envoi (S102), par la station de base secondaire, du paramètre de clé à un équipement utilisateur correspondant au DRB, moyennant quoi l'équipement utilisateur génère une clé de plan utilisateur selon le paramètre de clé et une clé de base générée par l'équipement utilisateur ;
la réception (S103), par la station de base secondaire, d'une clé de base générée par la station de base principale et envoyée par la station de base principale ; dans lequel la clé de base générée par l'équipement utilisateur et la clé de base générée par la station de base principale sont identiques ; et
la génération (S104), par la station de base secondaire, de la clé de plan utilisateur selon le paramètre de clé et la clé de base générée par la station de base principale ;
dans lequel la clé de plan utilisateur générée par l'équipement utilisateur et la clé de plan utilisateur générée par la station de base secondaire sont identiques.

2. Procédé de génération de clé selon la revendication 1, dans lequel la clé de plan utilisateur comprend une clé de protection d'intégrité de plan utilisateur ; dans lequel le procédé comprend en outre :
la réalisation, par la station de base secondaire, d'une protection d'intégrité sur des données de plan utilisateur selon la clé de protection d'intégrité de plan utilisateur ; et
l'envoi, par la station de base secondaire, à l'UE, des données de plan utilisateur protégées ;
et dans lequel le procédé comprend en outre :
la réception, par l'UE, de données de plan utilisateur protégées en provenance de la station de base secondaire ; et
la vérification, par l'UE, des données de plan utilisateur protégées en utilisant la clé de protection d'intégrité de plan utilisateur.

3. Procédé selon la revendication 1 ou 2, dans lequel la clé de plan utilisateur comprend une clé de chiffrement de plan utilisateur ; dans lequel le procédé comprend en outre :
le chiffrement, par la station de base secondaire, de données de plan utilisateur selon la clé de chiffrement de plan utilisateur ; et
l'envoi, par la station de base secondaire, des données de plan utilisateur chiffrées à l'UE.

4. Procédé selon l'une quelconque des revendications 1 à 3, dans lequel, avant la détermination, par une station de base secondaire, d'un paramètre de clé correspondant à un DRB, le procédé comprend en outre :
la réception, par la station de base secondaire, d'une demande d'établissement ou d'ajout de DRB envoyée par la station de base principale, dans lequel la demande d'établissement ou d'ajout de DRB transporte le paramètre de clé ; et
la détermination, par la station de base secondaire, d'un paramètre de clé correspondant à un DRB est plus particulièrement :
l'obtention, par la station de base secondaire, du paramètre de clé à partir de la demande d'établissement ou d'ajout de DRB.

5. Procédé selon l'une quelconque des revendications 1 à 4, dans lequel l'envoi, par la station de base secondaire, du paramètre de clé à un équipement utilisateur correspondant au DRB est plus particulièrement :
l'envoi, par la station de base secondaire, du paramètre de clé à l'équipement utilisateur en utilisant la station de base principale.

6. Procédé de génération de clé, comprenant :
la réception, par un équipement utilisateur, UE, d'un paramètre de clé en provenance d'une station de base principale ;
la génération, par l'UE, de la clé de plan utilisateur selon une clé de base et le paramètre de clé ; dans lequel la clé de base est générée sur la base d'une même clé partagée et d'un même paramètre de clé partagé entre l'UE et la station de base principale ; dans lequel la même clé partagée est une clé de station de base de la station de base principale ; dans lequel la clé de plan utilisateur est identique à une clé de plan utilisateur de la station de base secondaire.

7. Procédé de génération de clé selon la revendication 6, dans lequel la clé de plan utilisateur comprend une clé de protection d'intégrité de plan utilisateur ; dans lequel le procédé comprend en outre :
la réalisation, par l'UE, d'une protection d'intégrité sur des données de plan utilisateur selon la clé de protection d'intégrité de plan utilisateur ; et
l'envoi, par l'UE, des données de plan utilisateur protégées à une station de base secondaire ;
et dans lequel le procédé comprend en outre :
la réception, par l'UE, de données de plan utilisateur protégées en provenance de la station de base secondaire ; et
la vérification, par l'UE, des données de plan utilisateur protégées en utilisant la clé de protection d'intégrité de plan utilisateur.

8. Procédé de génération de clé selon la revendication 6 ou 7, dans lequel la clé de plan utilisateur comprend une clé de chiffrement de plan utilisateur et dans lequel le procédé comprend en outre :
le chiffrement, par l'UE, de données de plan utilisateur selon la clé de chiffrement de plan utilisateur ; et
l'envoi, par l'UE, des données de plan utilisateur chiffrées à la station de base secondaire.

9. Procédé de génération de clé selon la revendication 8, comprenant en outre :
la réception, par l'UE, de données de plan utilisateur chiffrées en provenance de la station de base secondaire ; et
le déchiffrement, par l'UE, des données de plan utilisateur chiffrées en utilisant la clé de chiffrement de plan utilisateur.

10. Procédé de génération de clé selon l'une quelconque des revendications 6 à 9, dans lequel la clé de base est identique à une clé de base de la station de base secondaire.

11. Appareil, comprenant :
une unité de détermination (410), configurée pour déterminer un paramètre de clé correspondant à un support radio de données, DRB ;
une unité d'envoi (420), configurée pour envoyer le paramètre de clé à un équipement utilisateur correspondant au DRB, moyennant quoi l'équipement utilisateur génère une clé de plan utilisateur selon le paramètre de clé et une clé de base générée par l'équipement utilisateur ;
une unité de réception (430), configurée pour recevoir une clé de base générée par la station de base principale et envoyée par la station de base principale ; dans lequel la clé de base générée par l'équipement utilisateur et la clé de base générée par la station de base principale sont identiques ; et
une unité de génération (440), configurée pour générer la clé de plan utilisateur selon le paramètre de clé et la clé de base générée par la station de base principale ; dans lequel la clé de plan utilisateur générée par l'équipement utilisateur et la clé de plan utilisateur générée par la station de base secondaire sont identiques.

12. Appareil selon la revendication 11, dans lequel la clé de plan utilisateur comprend une clé de protection d'intégrité de plan utilisateur ; dans lequel l'appareil est en outre configuré pour :
réaliser une protection d'intégrité sur des données de plan utilisateur selon la clé de protection d'intégrité de plan utilisateur ; et
envoyer à l'UE les données de plan utilisateur protégées ;
et dans lequel l'appareil est en outre configuré pour :
recevoir des données de plan utilisateur protégées en provenance de la station de base secondaire ; et
vérifier les données de plan utilisateur protégées en utilisant la clé de protection d'intégrité de plan utilisateur.

13. Appareil selon la revendication 12, dans lequel la clé de plan utilisateur comprend une clé de chiffrement de plan utilisateur ; dans lequel l'appareil est en outre configuré pour :
chiffrer des données de plan utilisateur selon la clé de chiffrement de plan utilisateur ; et
envoyer les données de plan utilisateur chiffrées à l'UE.

14. Appareil selon l'une quelconque des revendications 11 à 13, dans lequel l'unité de réception est en outre configurée pour recevoir une demande d'établissement ou d'ajout de DRB envoyée par la station de base principale, dans lequel la demande d'établissement ou d'ajout de DRB transporte le paramètre de clé ; et
dans lequel l'unité de détermination est plus particulièrement configurée pour obtenir le paramètre de clé à partir de la demande d'établissement ou d'ajout de DRB.

15. Appareil selon l'une quelconque des revendications 11 à 14, dans lequel l'unité d'envoi est plus particulièrement configurée pour envoyer le paramètre de clé à l'équipement utilisateur en utilisant la station de base principale.

16. Équipement utilisateur, UE, comprenant :
une unité de réception (1010), configurée pour recevoir un paramètre de clé en provenance d'une station de base secondaire par l'intermédiaire d'une station de base principale ;
une unité de génération (1020), configurée pour générer la clé de plan utilisateur en fonction d'une clé de base et du paramètre de clé ; dans lequel la clé de base est générée sur la base d'une même clé partagée et d'un même paramètre de clé partagée entre l'UE et la station de base principale ; dans lequel la même clé partagée est une clé de station de base de la station de base principale ; dans lequel la clé de plan utilisateur est identique à une clé de plan utilisateur de la station de base secondaire.

17. UE selon la revendication 16, dans lequel la clé de plan utilisateur comprend une clé de protection d'intégrité de plan utilisateur ; dans lequel l'UE est plus particulièrement configuré pour :
réaliser une protection d'intégrité sur des données de plan utilisateur selon la clé de protection d'intégrité de plan utilisateur ; et
envoyer les données de plan utilisateur protégées à une station de base secondaire ;
et dans lequel l'UE est en outre configuré pour :
recevoir des données de plan utilisateur protégées en provenance de la station de base secondaire ; et
vérifier les données de plan utilisateur protégées en utilisant la clé de protection d'intégrité de plan utilisateur.

18. UE selon la revendication 16 ou 17, dans lequel la clé de plan utilisateur comprend une clé de chiffrement de plan utilisateur et dans lequel l'UE est en outre configuré pour :
chiffrer des données de plan utilisateur selon la clé de chiffrement de plan utilisateur ; et
envoyer les données de plan utilisateur chiffrées à la station de base secondaire.

19. UE selon la revendication 18, dans lequel l'UE est en outre configuré pour :
recevoir des données de plan utilisateur chiffrées en provenance de la station de base secondaire ; et
déchiffrer les données de plan utilisateur chiffrées en utilisant la clé de chiffrement de plan utilisateur.

20. UE selon l'une quelconque des revendications 16 à 19, dans lequel la clé de base est identique à une clé de base de la station de base secondaire.
